# Europäisches Patentamt
## European Patent Office
### Office européen des brevets

(19)

(11) Veröffentlichungsnummer: **0 276 883 B1**

(12) **EUROPÄISCHE PATENTSCHRIFT**

(45) Veröffentlichungstag der Patentschrift: **04.03.92**

(21) Anmeldenummer: **88200086.2**

(22) Anmeldetag: **20.01.88**

(51) Int. Cl.⁵: **B01D 53/36**, B01J 27/055, B01J 27/053

(54) **Verfahren zur gleichzeitigen Entstickung und Entschwefelung eines sauerstoffhaltigen Abgases.**

(30) Priorität: **21.01.87 DE 3701527**

(43) Veröffentlichungstag der Anmeldung:
**03.08.88 Patentblatt 88/31**

(45) Bekanntmachung des Hinweises auf die
Patenterteilung:
**04.03.92 Patentblatt 92/10**

(84) Benannte Vertragsstaaten:
**AT BE CH DE ES FR GB GR IT LI LU NL SE**

(56) Entgegenhaltungen:
EP-A- 0 044 094       DE-A- 2 454 515
DE-A- 2 504 027       DE-A- 2 919 812
DE-A- 3 324 570       FR-A- 2 285 922
US-A- 4 164 546

(73) Patentinhaber: **METALLGESELLSCHAFT AG
Reuterweg 14 Postfach 3724
W-6000 Frankfurt/M.1(DE)**

(72) Erfinder: **Fennemann, Wolfgang
Schlinkenweg 16
W-6367 Karben 6(DE)**

## Beschreibung

Die Erfindung bezieht sich auf ein Verfahren zur Entstickung und Entschwefelung eines sauerstoffhaltigen Abgases, bei dem das Abgas mit $NH_3$ gemischt und bei dem anschließend die Stickoxide mit $NH_3$ katalytisch zu Stickstoff und Wasser reduziert sowie das $SO_2$ mit dem im Abgas enthaltenen Sauerstoff katalytisch zu $SO_3$ oxidiert wird.

Abgase, die bei der Verbrennung von Brennstoffen mit Luftsauerstoff entstehen, enthalten Oxide des Stickstoffs ($NO_x$) sowie Oxide des Schwefels $SO_x$), die aus den Abgasen entfernt werden müssen, da sie die Umwelt schädigen, wenn sie mit den Abgasen in die Atmosphäre gelangen. Neben $N_2O$ und $NO_2$ ist das NO der Hauptbestandteil der in den Verbrennungsabgasen enthaltenen Stickstoffoxide (ca. 90 % des $NO_x$-Gehalts liegen als NO vor). Die in den Verbrennungsabgasen enthaltenen Oxide des Schwefels bestehen fast ausschließlich aus $SO_2$, während $SO_3$ nur in geringer Menge vorliegt. Der $SO_2$-Gehalt der Abgase liegt zwischen 500 und 10 000 $mg/Nm^3$, während der $NO_x$-Gehalt ca. 100 bis 2 000 $mg/Nm^3$, berechnet als NO, beträgt. Neben $SO_2$ und den Stickstoffoxiden enthalten die Verbrennungsabgase Stickstoff, Wasserstoff und Kohlendioxid, sowie den restlichen Sauerstoff, der in der Regel im Abgas in einer Konzentration von 1 bis 10 % vorhanden ist.

Es ist bereits ein Verfahren zur Entstickung und Entschwefelung von Verbrennungsabgasen bekannt, das nach dem Prinzip der feststoffkatalysierten Gasphasenreaktion arbeitet und bei dem die Reduktion der Stickoxide mit Ammoniak und die Oxidation des $SO_2$ mit dem im Abgas vorhandenen Sauerstoff durch Feststoffkatalysatoren beschleunigt wird. In der DE-A-3 031 286 wird nämlich ein Verfahren zur Entstickung und Entschwefelung von Rauchgasen beschrieben, bei dem Ammoniak einem Rauchgas zugesetzt wird, das Schwefeloxide, Stickstoffoxide und Staub enthält, bei dem das Rauchgas dann in Berührung mit einem Katalysator zum Entfernen von Stickstoffoxiden gebracht wird, um die Stickstoffoxide im Wege der Reduktion zu beseitigen, bei dem das Rauchgas anschließend mit einem Schwefeldioxid oxidierenden Katalysator in Berührung gebracht wird, um Schwefeldioxid in Schwefeltrioxid umzuwandeln und bei dem es dem Schwefeltrioxid ermöglicht wird, mit Bestandteilen des Staubes im Rauchgas zu reagieren, wobei das Schwefeltrioxid als Sulfat vom Staub absorbiert und der Staub entfernt wird. Beim bekannten Verfahren erfolgt die Reduktion der Stickoxide und die Oxidation des $SO_2$ also in zwei voneinander getrennten Stufen, die in Festbettreaktoren ablaufen. Das bekannte Verfahren hat den Nachteil, daß die von Feststoffen katalysierten Reaktionen in zwei voneinander getrennten Stufen durchgeführt werden müssen.

Aus der US-A 4 164 546 ist ein Verfahren zur Entstickung von Abgasen bekannt, bei dem die im Abgas enthaltenen Oxide des Schwefels entweder vor, während oder nach der Abgasentstickung abgetrennt werden. Die Abgasentstickung erfolgt bei dem bekannten Verfahren durch Reduktion der Stickoxide mit Ammoniak bei Temperaturen zwischen 260 und 510 °C an einem im Festbett angeordneten Katalysator, der aus einem Träger sowie katalytisch aktiven Metalloxiden, Metallsulfaten und/oder Metallen besteht. Bevorzugt sind als Trägermaterial $SiO_2$ und als aktive Komponenten Eisenoxid, Kupferoxid und Vanadiumoxid. Werden nach dem bekannten Verfahren die Stickoxide und die Schwefeloxide gemeinsam aus den Abgasen abgetrennt, erfolgt dies in der Weise, daß die Abgase mit einer katalytisch aktiven Adsorptionsmasse in Kontakt gebracht werden, die vorzugsweise aus Kupferoxid und Aluminiumoxid besteht, und daß anschließend die Adsorptionsmasse mit reduzierend wirkenden Gasen regeneriert wird, wobei die von der Adsorptionsmasse gebundenen Schwefeloxide als $SO_2$ gewonnen werden.

Der Erfindung liegt daher die Aufgabe zugrunde, ein Verfahren der eingangs genannten Art zu schaffen, das bei technisch einfacher Arbeitsweise eine weitgehend quantitative Abtrennung des $SO_2$ und der Stickoxide aus Abgasen ermöglicht, das über einen langen Zeitraum kontinuierlich durchgeführt werden kann, das betriebssicher ist und umweltverträgliche Verfahrensprodukte liefert.

Diese Aufgabe wird in überraschender Weise dadurch gelöst, daß das $NH_3$-haltige Abgas als Wirbelgas in eine Wirbelschicht gelangt, in der eine Temperatur von 350 bis 600 °C herrscht und deren Wirbelbett aus einem Katalysator besteht, der gleichzeitig die Reduktion der Stickoxide und die Oxidation des $SO_2$ bewirkt und aus einem Träger sowie den katalytisch aktiven Substanzen $V_2O_5$ sowie $Fe_2O_3$, $FeSO_4$ und/oder $Fe_2(SO_4)_3$ zusammengesetzt ist, und daß das $SO_3$ aus dem Wirbelgas durch ein in die Wirbelschicht eingebrachtes Entschwefelungsmittel entfernt wird, welches aus $Na_2CO_3$, MgO, $MgCO_3$, CaCO, $CaCO_3$ und/oder $Ca(OH)_2$ besteht. Dieses Verfahren kann über einen langen Zeitraum kontinuierlich und betriebssicher durchgeführt werden.

Nach der Erfindung ist ferner vorgesehen, daß das Reduktionsmittel $NH_3$ dem Abgas im Molverhältnis NO : $NH_3$ = 1 : 0,8 bis 1 : 1,2 zugesetzt wird, daß das Abgas der Wirbelschicht mit einer Raumgeschwindigkeit von 1 000 bis 20 000 $h^{-1}$, vorzugsweise 2 000 bis 10 000 $h^{-1}$ zugeführt wird und daß in der Wirbelschicht eine Temperatur von 350 bis 600 °C, vorzugsweise 400 bis 500 °C, herrscht. Bei diesen Verfahrensbedingungen verläuft die Bildung von $N_2$ und $SO_3$ auch im techni-

schen Maßstab hinreichend schnell sowie mit hoher Ausbeute. Das erfindungsgemäße Verfahren kann besonders erfolgreich durchgeführt werden, wenn die Wirbelschicht als zirkulierende Wirbelschicht ausgebildet ist, in der das Wirbelgas eine Geschwindigkeit von 3 bis 12 m/s, vorzugsweise 5 bis 10 m/s, hat.

Weiterhin ist nach der Erfindung vorgesehen, daß der Katalysator einen Teilchendurchmesser von 0,1 bis 3 mm, vorzugsweise 0,2 bis 2 mm, hat. Besonders vorteilhaft ist es, wenn der Träger des Katalysators aus $SiO_2$ besteht und wenn der Katalysator als Promotor $Na_2SO_4$, $K_2SO_4$ und/oder $Cs_2SO_4$ enthält. Es hat sich gezeigt, daß $SO_2$ durch den im Abgas enthaltenen restlichen Sauerstoff zu $SO_3$ oxidiert wird, wobei das $V_2O_5$ als Oxidationskatalysator wirkt. Gleichzeitig wird das NO durch das Reduktionsmittel $NH_3$ zu Stickstoff und Wasser reduziert, wobei $Fe_2O_3$ sowie die Sulfate des zweiwertigen und dreiwertigen Eisens als Reduktionskatalysator wirken. Mit dem beim erfindungsgemäßen Verfahren verwendeten Katalysator werden mehr als 90 % der Stickoxide und mehr als 90 des $SO_2$ aus dem Abgas entfernt. Das erfindungsgemäße Verfahren kann insbesondere mit den Katalysatoren erfolgreich durchgeführt werden, deren Zusammensetzung in den Patentansprüchen 9 bis 13 angegeben ist.

Nach der Erfindung ist auch vorgesehen, daß das $SO_3$ aus dem Wirbelgas durch ein Entschwefelungsmittel entfernt wird, das aus $Na_2CO_3$, MgO, $MgCO_3$, CaO, $CaCO_3$ und/oder $Ca(OH)_2$ besteht und daß das Entschwefelungsmittel dem Wirbelgas im Molverhältnis ($2\,Me^+$ oder $Me^{2+}$) : S = 1 : 1 bis 3 : 1 zugegeben wird ($Me^+$ = Na; $Me^{2+}$ = Mg, Ca; S = Schwefelgehalt des Abgases, wobei der Schwefel im Abgas als $SO_2$ vorliegt). Das durch Oxidation des $SO_2$ gebildete $SO_3$ reagiert sehr schnell mit dem Entschwefelungsmittel unter Bildung der Sulfate des Natriums, Magnesiums und/oder Calciums, die aus dem gereinigten Abgas ohne weiteres entfernt werden können. Nach der Erfindung ist es besonders vorteilhaft, wenn das Entschwefelungsmittel einen Teilchendurchmesser von 0,01 bis 3 mm hat.

Durch das Zusammenwirken der nach der Erfindung vorgesehenen Teilchengrößen des Katalysators und des Entschwefelungsmittels sowie der Gasgeschwindigkeit wird ermöglicht, daß das Entschwefelungsmittel in die Wirbelschicht eingebracht werden kann, denn die Katalysatorteilchen verbleiben in der Wirbelschicht und der staubförmige Katalysatorabrieb sowie die staubförmigen Sulfate werden aus der Wirbelschicht ausgetragen. Wenn das Entschwefelungsmittel in Form größerer Teilchen, die einen Durchmesser von 0,1 bis 3 mm haben, in die Wirbelschicht eingebracht wird, bildet sich durch die Einwirkung der harten Katalysatorteilchen staubförmiges Entschwefelungsmittel, das schnell mit dem $SO_3$ reagiert und dessen staubförmige Reaktionsprodukte (Sulfate) aus der Wirbelschicht ausgetragen werden. Da der Katalysator eine hohe mechanische Festigkeit besitzt, ist der Katalysatorabrieb gering, und die Sulfate enthalten nur kleine Mengen der katalytisch aktiven Substanzen.

Das nach dem erfindungsgemäßen Verfahren gereinigte Abgas hat folgende Schadstoffgehalte:

$NH_3$ 10 mg/Nm$^3$
$SO_3$ 1 mg/Nm$^3$
NO 10 % des NO-Gehalts des Abgases
$SO_2$ 10 % des $SO_2$-Gehalts des Abgases.

Der Gegenstand der Erfindung wird nachfolgend anhand eines Ausführungsbeispiels näher erläutert.

Nach dem erfindungsgemäßen Verfahren wurde ein Abgas gereinigt, das folgende Zusammensetzung hatte:

$SO_2$ 4 975 mg/Nm$^3$
HCl 66 mg/Nm$^3$
NO + $NO_2$ 758 mg/Nm$^3$, berechnet als NO
$H_2O$ 16,6 Vol.%
$CO_2$ 11,4 Vol.%
$O_2$ 7 Vol.%
$N_2$ Rest

Das Abgas wurde der Wirbelschicht mit einer Gasgeschwindigkeit von 1,5 m/s zugeführt. Dem Abgas wurde kurz vor dem Eintritt in die Wirbelschicht $NH_3$ im Molverhältnis $NH_3$ : NO = 1 : 1 zugegeben. In der Wirbelschicht herrschte eine Temperatur von 400°C sowie eine Raumgeschwindigkeit von ca. 3 000 h$^{-1}$ (Raumgeschwindigkeit = Gasvolumen pro Stunde geteilt durch Katalysatorvolumen = h$^{-1}$). Der Wirbelschicht wurde staubförmiges, trockenes $Ca(OH)_2$ zugeführt, wobei das Molverhältnis Ca : S = 1 : 2,5 betrug. In der Wirbelschicht befanden sich 2 Teile Entstickungskatalysator (8 Gew.% $FeSO_4$ auf einem $SiO_2$-Träger) und 1 Gewichtsteil Oxidationskatalysator (8 Gew.% $V_2O_5$, 20 Gew.% $K_2SO_4$, 5 Gew.% $Na_2SO_4$, Rest $SiO_2$).

Das aus der Wirbelschicht austretende gereinigte Abgas hatte einen $NH_3$-Gehalt von 6 bis 7 mg/Nm$^3$, und der $SO_3$-Gehalt lag unter 1 mg/Nm$^3$. Da das gereinigte Abgas noch einen $SO_2$-Gehalt von 400 mg/Nm$^3$ hatte, betrug die Entschwefelungsleistung des erfindungsgemäßen Verfahrens 92 %. Das gereinigte Abgas hatte einen $NO_x$-Gehalt von 76 mg/Nm$^3$, was einer Entstickungsleistung von 90 % entspricht. Die im Abgas enthaltenen weiteren sauren Bestandteile, insbesondere HCl, konnten im gereinigten Abgas nicht mehr nachgewiesen werden, da sie mit dem Entschwefelungsmittel Ca(OH)$_2$ reagiert hatten.

Die staubförmigen Calciumverbindungen sowie der staubförmige Katalysatorabrieb wurden in einem Zyklon und einem nachgeschalteten Elektrofilter nahezu quantitativ aus dem gereinigten Abgas abgeschieden. Eine reislaufführung des Entschwefelungsmittels, das bei einem Durchgang durch die Wirbelschicht nur teilweise mit SO$_3$ reagiert hat, ist erforderlich, um eine bessere Nutzung des Entschwefelungsmittels zu erreichen.

**Patentansprüche**

1. Verfahren zur Entstickung und Entschwefelung eines sauerstoffhaltigen Abgases, bei dem das Abgas mit NH$_3$ gemischt und bei dem anschließend die Stickoxide mit NH$_3$ katalytisch zu Stickstoff und Wasser reduziert sowie das SO$_2$ mit dem im Abgas enthaltenen Sauerstoff katalytisch zu SO$_3$ oxidiert wird, dadurch gekennzeichnet, daß das NH$_3$-haltige Abgas als Wirbelgas in eine Wirbelschicht gelangt, in der eine Temperatur von 350 bis 600°C herrscht und deren Wirbelbett aus einem Katalysator besteht, der gleichzeitig die Reduktion der Stickoxide und die Oxidation des SO$_2$ bewirkt und aus einem Träger sowie den katalytisch aktiven Substanzen V$_2$O$_5$ sowie Fe$_2$O$_3$, FeSO$_4$ und/oder Fe$_2$(SO$_4$)$_3$ zusammengesetzt ist, und daß das SO$_3$ aus dem Wirbelgas durch ein in die Wirbelschicht eingebrachtes Entschwefelungsmittel entfernt wird, welches aus Na$_2$CO$_3$, MgO, MgCO$_3$, CaO, CaCO$_3$ und/oder Ca(OH)$_2$ besteht.

2. Verfahren nach Anspruch 1, dadurch gekennzeichnet, daß das Reduktionsmittel NH$_3$ dem Abgas im Molverhältnis NO : NH$_3$ = 1 : 0,8 bis 1 : 1,2 zugemischt wird.

3. Verfahren nach den Ansprüchen 1 bis 2, dadurch gekennzeichnet, daß das Abgas der Wirbelschicht mit einer Raumgeschwindigkeit von 1 000 bis 20 000 h$^{-1}$, vorzugsweise 2 000 bis 10 000 h$^{-1}$, zugeführt wird.

4. Verfahren nach den Ansprüchen 1 bis 3, dadurch gekennzeichnet, daß in der Wirbelschicht eine Temperatur von 400 bis 500°C herrscht.

5. Verfahren nach den Ansprüchen 1 bis 4, dadurch gekennzeichnet, daß die Wirbelschicht als zirkulierende Wirbelschicht ausgebildet ist, in der das Wirbelgas eine Geschwindigkeit von 3 bis 12 m/s, vorzugsweise 5 bis 10 m/s, hat.

6. Verfahren nach den Ansprüchen 1 bis 5, dadurch gekennzeichnet, daß der Katalysator einen Teilchendurchmesser von 0,1 bis 3 mm, vorzugsweise 0,2 bis 2 mm, hat.

7. Verfahren nach den Ansprüchen 1 bis 6, dadurch gekennzeichnet, daß der Träger des Katalysators aus SiO$_2$ besteht.

8. Verfahren nach den Ansprüchen 1 bis 7 dadurch gekennzeichnet, daß der Katalysator als Promotor Na$_2$SO$_4$, K$_2$SO$_4$ und/oder Cs$_2$SO$_4$ enthält.

9. Verfahren nach den Ansprüchen 1 bis 8, dadurch gekennzeichnet, daß der Katalysator aus 2 bis 10 Gew.% FeSO$_4$ und/oder Fe$_2$(SO$_4$)$_3$, 2 bis 6 Gew.% V$_2$O$_5$, 5 bis 15 Gew.% K$_2$SO$_4$ und Rest SiO$_2$ besteht.

10. Verfahren nach den Ansprüchen 1 bis 8, dadurch gekennzeichnet, daß der Katalysator aus 2 bis 10 Gew.% FeSO$_4$ und/oder Fe$_2$(SO$_4$)$_3$, 2 bis 6 Gew.% V$_2$O$_5$, 5 bis 15 Gew.% K$_2$SO$_4$ und Rest SiO$_2$ besteht, wobei das K$_2$SO$_4$ zu 5 bis 100 Mol% durch Cs$_2$SO$_4$ ersetzt ist.

11. Verfahren nach den Ansprüchen 1 bis 8, dadurch gekennzeichnet, daß der Katalysator eine aus zwei Komponenten bestehende Mischung darstellt, deren erste Komponente aus 3 bis 10 Gew.% V$_2$O$_5$, 10 bis 30 Gew.% K$_2$SO$_4$ sowie Rest SiO$_2$ und deren Zweite Komponente aus FeSO$_4$ und/oder Fe$_2$(SO$_4$)$_3$ sowie Rest SiO$_2$ besteht, wobei die Eisensulfatmenge, berechnet als Fe$_2$O$_3$, 2 bis 14 Gew.%, vorzugsweise 4 bis 12 Gew.%, und die SiO$_2$-Menge 86 bis 98 Gew.%, vorzugsweise 88 bis 96 Gew.%, beträgt.

12. Verfahren nach Anspruch 11, dadurch gekennzeichnet, daß der K$_2$SO$_4$-Gehalt durch 5 bis 100 Mol% Na$_2$SO$_4$ und/oder Cs$_2$SO$_4$ ersetzt ist.

13. Verfahren nach den Ansprüchen 11 bis 12, dadurch gekennzeichnet, daß die vanadiumhaltige Katalysatorkomponente und die eisenhaltige Katalysatorkomponente im Gewichtsverhältnis 3 : 1 bis 1 : 3 gemischt sind.

14. Verfahren nach den Ansprüchen 1 bis 13, dadurch gekennzeichnet, daß das Entschwefelungsmittel dem Wirbelgas im Molverhältnis (2 Me$^+$ oder Me$^{2+}$) : S = 1 : 1 bis 3 : 1 zugegeben wird.

15. Verfahren nach den Ansprüchen 1 bis 14, dadurch gekennzeichnet, daß das Entschwefelungsmittel einen Teilchendurchmesser von 0,01 bis 3 mm hat.

## Claims

1. A process for removing nitrogen and sulphur from an oxygen-containing exhaust gas, in which the exhaust gas is mixed with $NH_3$ and in which the nitrogen oxides are then reduced catalytically with $NH_3$ to form nitrogen and water, and the $SO_2$ is catalytically oxidised with the oxygen contained in the exhaust gas to form $SO_3$, characterised in that the $NH_3$-containing exhaust gas passes as a fluidising gas into a fluidised bed system in which there is a temperature of 350 to 600°C, and the fluidised bed system of which consists of a catalyst which simultaneously brings about the reduction of the nitrogen oxides and the oxidation of the $SO_2$ and is composed of a support and also the catalytically active substances $V_2O_5$ and also $Fe_2O_3$, $FeSO_4$ and/or $Fe_2(SO_4)_3$, and that the $SO_3$ is removed from the fluidising gas by means of a desulphurisation agent introduced into the fluidised bed system, which agent consists of $Na_2CO_3$, MgO, $MgCO_3$, CaO, $CaCO_3$ and/or $Ca(OH)_2$.

2. A process according to Claim 1, characterised in that the reduction agent $NH_3$ is admixed to the exhaust gas in a molar ratio of NO : $NH_3$ = 1 : 0.8 to 1 : 1.2.

3. A process according to Claims 1 or 2, characterised in that the exhaust gas is fed to the fluidised bed system at a space velocity of 1,000 to 20,000 $h^{-1}$, preferably 2,000 to 10,000 $h^{-1}$.

4. A process according to Claims 1 to 3, characterised in that a temperature of 400 to 500°C is maintained in the fluidised bed system.

5. A process according to Claims 1 to 4, characterised in that the fluidised bed system is designed as a circulating fluidised bed system, in which the fluidising gas has a velocity of 3 to 12 m/s, preferably 5 to 10 m/s.

6. A process according to Claims 1 to 5, characterised in that the catalyst has a particle diameter of 0.1 to 3 mm, preferably 0.2 to 2 mm.

7. A process according to Claims 1 to 6, characterised in that the support of the catalyst consists of $SiO_2$.

8. A process according to Claims 1 to 7, characterised in that the catalyst contains $Na_2SO_4$, $K_2SO_4$ and/or $Cs_2SO_4$ as promotor.

9. A process according to Claims 1 to 8, characterised in that the catalyst consists of 2 to 10% by weight $FeSO_4$ and/or $Fe_2(SO_4)_3$, 2 to 6% by weight $V_2O_5$, 5 to 15% by weight $K_2SO_4$ and remainder $SiO_2$.

10. A process according to Claims 1 to 8, characterised in that the catalyst consists of 2 to 10% by weight $FeSO_4$ and/or $Fe_2(SO_4)_3$, 2 to 6% by weight $V_2O_5$, 5 to 15% by weight $K_2SO_4$ and remainder $SiO_2$, with from 5 to 100 mole percent of the $K_2SO_4$ being replaced by $Cs_2SO_4$.

11. A process according to Claims 1 to 8, characterised in that the catalyst is a mixture consisting of two constituents, the first constituent of which consists of 3 to 10% by weight $V_2O_5$, 10 to 30% by weight $K_2SO_4$ and remainder $SiO_2$, and the second constituent of which consists of $FeSO_4$ and/or $Fe_2(SO_4)_3$ and remainder $SiO_2$, the quantity of iron sulphate, calculated as $Fe_2O_3$, being 2 to 14 % by weight, preferably 4 to 12% by weight, and the quantity of $SiO_2$ being 86 to 98% by weight, preferably 88 to 96% by weight.

12. A process according to Claim 11, characterised in that the $K_2SO_4$ content is replaced by 5 to 100 mole percent $Na_2SO_4$ and/or $Cs_2SO_4$.

13. A process according to Claims 11 to 12, characterised in that the vanadium-containing catalyst constituent and the iron-containing catalyst constituent are mixed in a weight ratio of 3 : 1 to 1 : 3.

14. A process according to Claims 1 to 13, characterised in that the desulphurisation agent is added to the fluidising gas in a molar ratio of $(2 Me^+$ or $Me^{2+}) : S = 1 : 1$ to $3 : 1$.

15. A process according to Claims 1 to 14, characterised in that the desulphurisation agent has a particle diameter of 0.01 to 3 mm.

## Revendications

1. Procédé de dénitration et de désulfuration d'un effluent gazeux contenant de l'oxygène, qui consiste à mélanger l'effluent gazeux à du $NH_3$ et à réduire ensuite catalytiquement les oxydes d'azote par $NH_3$ en azote et en eau ainsi qu'à oxyder catalytiquement le $SO_2$ en

$SO_3$ par l'oxygène contenu dans l'effluent gazeux, caractérisé en ce qu'il consiste à envoyer l'effluent gazeux contenant du $NH_3$, sous forme de gaz fluidisé, dans une couche fluidisée dans laquelle règne une température de 350 à 600°C et dont le lit fluidisé est constitué d'un catalyseur qui provoque simultanément la réduction des oxydes d'azote et l'oxydation du $SO_2$ et qui est composé d'un support, ainsi que des substances actives catalytiquement que sont $V_2O_5$, ainsi que $Fe_2O_3$, $FeSO_4$ et/ou $Fe_2(SO_4)_3$ et à éliminer le $SO_3$ du gaz fluidisé par un agent de désulfuration introduit dans la couche fluidisée et constitué de $Na_2CO_3$, $MgO$, $MgCO_3$, $CaO$, $CaCO_3$ et/ou $Ca(OH)_2$.

2. Procédé suivant la revendication 1, caractérisé en ce qu'il consiste à ajouter l'agent réducteur qu'est $NH_3$ à l'effluent gazeux en un rapport molaire $NO:NH_3$ = 1:0,8 à 1:1,2.

3. Procédé suivant la revendication 1 ou 2, caractérisé en ce qu'il consiste à envoyer l'effluent gazeux à la couche fluidisée à une vitesse spatiale de 1000 à 20 000 $h^{-1}$ et, de préférence de 2000 à 10 000 $h^{-1}$.

4. Procédé suivant l'une des revendications 1 à 3, caractérisé en ce qu'il règne dans la couche fluidisée une température de 400 à 500°C.

5. Procédé suivant l'une des revendications 1 à 4, caractérisé en ce qu'il consiste à constituer la couche fluidisée sous la forme d'une couche fluidisée circulante dans laquelle le gaz fluidisé a une vitesse de 3 à 12 m/s et, de préférence, de 5 à 10 m/s.

6. Procédé suivant l'une des revendications 1 à 5, caractérisé en ce que le catalyseur a un diamètre de particule de 0,1 à 3 mm et, de préférence, de 0,2 à 2 mm.

7. Procédé suivant l'une des revendications 1 à 6, caractérisé en ce que le support du catalyseur est en $SiO_2$.

8. Procédé suivant l'une des revendications 1 à 7, caractérisé en ce que le catalyseur contient comme promoteur $Na_2SO_4$, $K_2SO_4$ et/ou $Cs_2SO_4$.

9. Procédé suivant l'une des revendications 1 à 8, caractérisé en ce que le catalyseur est constitué de 10 % en poids de $FeSO_4$ et/ou de $Fe_2(SO_4)_3$, de 2 à 6 % en poids de $V_2O_5$, de 5 à 15 % en poids de $K_2SO_4$, le reste étant du $SiO_2$.

10. Procédé suivant l'une des revendications 1 à 8, caractérisé en ce que le catalyseur est constitué de 2 à 10 % en poids de $FeSO_4$ et/ou de $Fe_2(SO_4)_3$, de 2 à 6 % en poids de $V_2O_5$, de 5 à 15 % en poids de $K_2SO_4$, le reste étant du $SiO_2$, le $K_2SO_4$ étant remplacé pour 5 à 100 % en mole par du $Cs_2SO_4$.

11. Procédé suivant l'une des revendications 1 à 8, caractérisé en ce que le catalyseur représente un mélange constitué de deux constituants dont le premier constituant comprend pour 3 à 10 % en poids du $V_2O_5$, pour 10 à 30 % en poids du $K_2SO_4$, le reste étant du $SiO_2$ et dont le second constituant comprend du $FeSO_4$ et/ou du $Fe_2(SO_4)_3$, le reste étant du $SiO_2$, la quantité de sulfate de fer, exprimée en $Fe_2O_3$, représentant de 2 à 14 % en poids et, de préférence, de 4 à 12 % en poids, et la quantité de $SiO_2$ de 86 et 98 % en poids et, de préférence, de 88 et 96 % en poids.

12. Procédé suivant la revendication 11, caractérisé en ce que la teneur en $K_2SO_4$ est remplacée par 5 à 100 % en mole de $Na_2S_4$ et/ou de $Cs_2SO_4$.

13. Procédé suivant la revendication 11 ou 12, caractérisé en ce qu'il consiste à mélanger les constituants du catalyseur contenant du vanadium et les constituants du catalyseur contenant du fer en le rapport pondéral 3:1 à 1:3.

14. Procédé suivant l'une des revendications 1 à 13, caractérisé en ce qu'il consiste à ajouter l'agent de désulfuration au gaz fluidisé en le rapport molaire (2 $Me^+$ ou $Me^{2+}$) : S = 1 : 1 à 3 : 1.

15. Procédé suivant l'une des revendications 1 à 14, caractérisé en ce que l'agent de désulfuration a un diamètre de particule de 0,01 à 3 mm.